# EUROPÄISCHE PATENTSCHRIFT

(11) **EP 2 484 477 B1**
(45) Veröffentlichungstag und Bekanntmachung des Hinweises auf die Patenterteilung: **28.06.2017**
(21) Anmeldenummer: 12152356.7
(22) Anmeldetag: 25.01.2012
(51) Int. Cl.: B23K 26/08, F16J 3/04, B23K 26/12

(54) **Laserbearbeitungsmaschine mit einem Bewegungseinheiten aufweisenden Strahlführungselement für einen Laserstrahl**
Laser processing machine with a beam guidance element for a laser beam, having displacement units
Machine de traitement au laser dotée d'un élément de guidage de rayon pour un rayon laser ayant des unités de déplacement

(30) Priorität: 02.02.2011 DE 102011003523
(43) Veröffentlichungstag der Anmeldung: 08.08.2012
(73) Patentinhaber: Trumpf Sachsen GmbH, 01904 Neukirch (DE)
(72) Erfinder: Harnisch, Gunter, 01936 Königsbrück (DE); Knobel, Carsten, 02689 Sohland (DE)
(74) Vertreter: Kohler Schmid Möbus Patentanwälte

(56) Entgegenhaltungen:
- WO-A1-2008/067836
- JP-A- S58 142 302
- JP-A- 2001 191 192
- JP-A- 2004 009 121

## Beschreibung

Diese Erfindung betrifft eine Laserbearbeitungsmaschine
- mit einem Strahlführungselement für einen Laserstrahl, welches mit seiner Längsrichtung in Richtung der Strahlachse des von ihm aufzunehmenden Laserstrahls verläuft und welches wenigstens mit einem Teil in seiner Längsrichtung beweglich und dadurch längenveränderlich ist sowie
- mit einer Bewegungseinheit, an welche das Strahlführungselement angebunden ist und die unter Änderung der Länge des Strahlführungselementes gemeinsam mit dem Strahlführungselement in dessen Längsrichtung bewegbar ist,
- wobei das Strahlführungselement an einer in seiner Längsrichtung verlaufenden Längsführungseinrichtung senkrecht zu seiner Längsrichtung abgestützt und bei einer Bewegung in seiner Längsrichtung geführt ist und
- wobei die Bewegungseinheit an einer von der Längsführungseinrichtung des Strahlführungselementes verschiedenen Tragstruktur der Laserbearbeitungsmaschine senkrecht zu der Längsrichtung des Strahlführungselementes abgestützt ist.

Gattungsgemäßer Stand der Technik ist bekannt aus JP 2004 009121 A, JP S58 142302 A und JP 2001 191192 A.

JP 2004 009121 A, die als nächstliegenden Stand der Technik angeschen wird, offenbart eine Laserbearbeitungsmaschine mit einer Strahlführung für einen Laserstrahl. Eine Tragstruktur der Laserbearbeitungsmaschine ist mit einem Paar horizontal verlaufender Führungsschienen sowie mit einem Führungsprofil versehen, das sich oberhalb der Führungsschienen parallel zu diesen erstreckt. An den Führungsschienen ist ein Laserbearbeitungskopf in horizontaler Richtung beweglich geführt. Auf dem Führungsprofil sitzen Führungsrollen auf. Die Führungsrollen sind drehbar an abgewinkelten Armen gelagert, die ihrerseits an rechteckigen Rahmen vorstehen. Die rechteckigen Rahmen lagern einen zur Aufnahme eines Laserstrahls vorgesehenen Schutzbalg, der sich parallel zu den Führungsschienen und dem Führungsprofil erstreckt und der mit einem Ende an dem Laserbearbeitungskopf angebracht ist. Bei Bewegungen des Laserbearbeitungskopfs längs der Führungsschienen wird der Schutzbalg je nach Bewegungsrichtung des Laserbearbeitungskopfs gelängt oder verkürzt. Dabei wird der Schutzbalg über die an den rechteckigen Rahmen gelagerten Führungsrollen an dem Führungsprofil in seiner Längsrichtung geführt. Der dem Laserbearbeitungskopf nächstliegende rechteckige Rahmen ist mit dem Laserbearbeitungskopf verbunden. Das Führungsprofil für den Schutzbalg stützt sich nicht über den Laserbearbeitungskopf an der Tragstruktur der Laserbearbeitungsmaschine ab.

JP S58 142302 A betrifft eine Anordnung zum Laserbearbeiten von Wertstücken. Eine portalartige Tragstruktur weist einen Portalquerträger auf, an welchem ein Laserbearbeitungskopf sowie ein Schutzbalg einer Strahlführung für einen Laserstrahl aufgehängt sind. Der Laserbearbeitungskopf ist an der Oberseite des Portalquerträgers gelagert und längs des Portalquerträgers in horizontaler Richtung verfahrbar. An einer Längsseite des Portalquerträgers ist eine Führungsstange angebracht, die eine Aufhängung des Schutzbalgs in horizontaler Richtung führt. Ein zwischen der Aufhängung und dem Laserbearbeitungskopf angeordneter Teil des Schutzbalgs ist an einem Ende mit einer Strahlumlenkung des Laserbearbeitungskopfs und an dem anderen Ende mit der Aufhängung verbunden. Aufgrund der Flexibilität des Schutzbalgs zwischen der Aufhängung und dem Laserbearbeitungskopf kann weder der Laserbearbeitungskopf über die Aufhängung und die portalseitige Führungsstange noch die portalseitige Führungsstange über die Aufhängung und den Laserbearbeitungskopf senkrecht zu der Längsrichtung des Schutzbalgs an dem Portalquerträger abgestützt werden.

JP 2001 191192 A offenbart eine Laserbearbeitungsmaschine. Die Laserbearbeitungsmaschine weist eine portalartige Tragstruktur mit einem Portalquerträger auf, längs dessen ein Laserbearbeitungskopf in horizontaler Richtung verfahren kann. Der Laserbearbeitungskopf ist an der Oberseite des Portalquerträgers gelagert. Ein Schutzbalg für einen Laserstrahl erstreckt sich zwischen dem Laserbearbeitungskopf und einem an der portalartigen Tragstruktur ortsfest angebrachten Laserresonator. Bei Horizontalbewegungen des Laserbearbeitungskopfs wird der Schutzbalg gelängt oder verkürzt. Dabei ist der Schutzbalg über im Wesentlichen rechteckige Rahmen an der Oberseite eines an dem Portalquerträger vorgesehenen Führungsprofils geführt. Zwischen dem Laserbearbeitungskopf und dem diesem nächstliegenden rechteckigen Rahmen erstreckt sich ein Teil des Schutzbalgs. Aufgrund der Flexibilität des Schutzbalgs ist es nicht möglich, Belastungen, die auf das Führungsprofil für den Schutzbalg senkrecht zu der Längsrichtung des Schutzbalgs wirken, über den Laserbearbeitungskopf in den Portalquerträger abzutragen.

Eine weitere Laserbearbeitungsmaschine ist bekannt aus WO 2008/067836 A1. Im Falle des Standes der Technik ist ein als Strahlführungsbalg ausgeführtes Strahlführungselement mit wenigstens einem Längsende an einem Führungsschlitten angebracht, der seinerseits eine Bewegungseinheit bildet. Der Führungsschlitten ist an wenigstens einer Führungsstange in deren Längsrichtung beweglich geführt. Die wenigstens eine Führungsstange dient demnach als Längsführungseinrichtung für den Strahlführungsbalg. Bei Bewegungen eines Laserbearbeitungskopfes der vorbekannten Laserbearbeitungsmaschine bewegt sich der Führungsschlitten unter Längen oder Stauchen des Strahlführungsbalges an der oder den Führungsstangen entlang. Ist der Arbeitsbereich der Laserbearbeitungsmaschine groß bemessen, so kann der Laserbearbeitungskopf zwischen einzelnen Bearbeitungsstellen über lange Strecken zu bewegen sein. Entsprechend groß ist der Bewegungsbereich des mit dem Laserbearbeitungskopf gekoppelten Führungsschlittens und entsprechend lang muss die wenigstens eine Führungsstange sein, an welcher der Führungsschlitten bei seinen Bewegungen geführt ist. Damit eine funktionssichere Führung des Strahlführungsbalges gewährleistet werden kann, muss die wenigstens eine Führungsstange eine entsprechende Steifigkeit besitzen.

Eine funktionssichere Führung eines Strahlführungselementes auch dann sicherzustellen, wenn die Längsführungseinrichtung des Strahlführungselementes stark belastet wird, ist Aufgabe der vorliegenden Erfindung.

Erfindungsgemäß gelöst wird diese Aufgabe durch die Laserbearbeitungsmaschine gemäß Patentanspruch 1. Anspruchsgemäß ist an einer Laserbearbeitungsmaschine die Bewegungseinheit an einer von der Längsführungseinrichtung des Strahlführungselementes verschiedenen Tragstruktur der Laserbearbeitungsmaschine senkrecht zu der Längsrichtung des Strahlführungselementes abgestützt. Die Bewegungseinheit ist folglich in der Lage, ihrerseits die Längsführungseinrichtung des Strahlführungselementes senkrecht zu dessen Längsrichtung abzustützen. Aufgrund dieser Maßnahme ist die Formstabilität der Längsführungseinrichtung des Strahlführungselementes und somit eine funktionssichere Führung des Strahlführungselementes in seiner Längsrichtung selbst dann gewährleistet, wenn die Längsführungseinrichtung des Strahlführungselementes großen Belastungen unterworfen ist. Derartige Belastungen treten beispielsweise in Schwerkraftrichtung und/oder in horizontaler Richtung dann auf, wenn die Längsführungseinrichtung zwischen Auflagern eine lange Strecke überbrücken muss bzw. wenn die Längsführungseinrichtung bearbeitungsbedingt in ihrer horizontalen Querrichtung bewegt wird und dabei Beschleunigungen ausgesetzt ist, wie sie an modernen Laserbearbeitungsmaschinen üblich sind. Insbesondere in derartigen Anwendungsfällen sorgt die über die Bewegungseinheit bewirkte Abstützung der Längsführungseinrichtung des Strahlführungselementes an einer Tragstruktur der Laserbearbeitungsmaschine dafür, dass Verformungen der Längsführungseinrichtung und eine damit verbundene Beeinträchtigung der Funktionssicherheit der Längsführung des Strahlführungselementes ausgeschlossen sind. Infolgedessen ist eine funktionssichere Längsführung des Strahlführungselementes selbst mit einer Längsführungseinrichtung möglich, die keine besonders ausgeprägte Eigensteifigkeit besitzt und dementsprechend schlank und leicht gebaut sein kann. Als Strahlführungselemente in Frage kommen etwa Strahlführungsbälge oder teleskopierbare Strahlführungsrohre. Als Bewegungseinheit, welche das Strahlführungselement bei Bewegungen in dessen Längsrichtung mitnimmt, kann beispielsweise ein Schlitten für den Laserbearbeitungskopf der betreffenden Laserbearbeitungsmaschine vorgesehen sein.

Besondere Ausführungsarten der Laserbearbeitungsmaschine nach Patentanspruch 1 ergeben sich aus den abhängigen Patentansprüchen 2 bis 10.

Patentanspruch 2 betrifft eine Ausführungsform der erfindungsgemäßen Laserbearbeitungsmaschine, im Falle derer der Innenraum des Strahlführungselementes mit Ausnahme der Strömungsverbindung mit einem Volumenausgleichselement gegen die Umgebung abgeschlossen ist. Eine derartige Bauweise des Strahlführungselementes ist in Fällen üblich, in denen im Innern des Strahlführungselementes ein strömungsfähiges, insbesondere ein gasförmiges Medium ansteht, dessen Zusammensetzung derart gewählt ist, dass der aufzunehmende Laserstrahl nicht in Mitleidenschaft gezogen wird. Ist das Volumenausgleichselement gemeinsam mit dem Strahlführungselement an dessen Längsführungseinrichtung senkrecht zu der Längsrichtung des Strahlführungselementes abgestützt und wird die Einheit aus Längsführungseinrichtung, Strahlführungselement und Volumenausgleichselement in einer senkrecht zu der Längsrichtung des Strahlführungselementes verlaufenden Bewegungsrichtung bewegt, so wirken bei Beschleunigungsvorgängen die Masse des Strahlführungselementes und auch die Masse des Volumenausgleichselementes auf die Längsführungseinrichtung des Strahlführungselementes. Eine zumindest teilweise gegenseitige Kompensation der auf die Masse des Strahlführungselementes und der auf die Masse des Volumenausgleichelementes zurückzuführenden Einflüsse wird dann erzielt, wenn - wie anspruchsgemäß vorgesehen - das Strahlführungselement und das Volumenausgleichselement an Seiten der Längsführungseinrichtung des Strahlführungselementes angeordnet sind, die senkrecht zu der Längsrichtung des Strahlführungselementes und außerdem senkrecht zu der Bewegungsrichtung der Einheit aus Längsführungseinrichtung, Strahlführungselement und Volumenausgleichselement einander gegenüberliegen. Verläuft die Längsrichtung des Strahlführungselementes horizontal und verfährt die Einheit aus Längsführungseinrichtung, Strahlführungselement und Volumenausgleichselement senkrecht dazu gleichfalls in horizontaler Richtung und sind das Strahlführungselement und das Volumenausgleichselement an einander in vertikaler Richtung gegenüberliegenden Seiten der Längsführungseinrichtung gelagert, so sind ein beschleunigungsbedingtes Drehmoment aufgrund der Masse des Strahlführungselementes und ein gleichzeitig wirksames beschleunigungsbedingtes Drehmoment aufgrund der Masse des Volumenausgleichselementes um die einen Drehpunkt bildende Längsführungseinrichtung einander entgegengerichtet. Die resultierende Drehmomentenbelastung der Längsführungseinrichtung ist folglich minimiert. Ein zwischen dem Strahlführungselement und dem Volumenausgleichselement verbleibender Zwischenraum kann gegebenenfalls zur Unterbringung weiterer Einrichtungen der Laserbearbeitungsmaschine genutzt werden. Insbesondere können in einem derartigen Zwischenraum Steuer- und Versorgungsleitungen für den Laserbearbeitungskopf beispielsweise im Innern einer Energiekette angeordnet werden.

Gemäß Patentanspruch 3 ist die Längsführungseinrichtung des Strahlführungselementes in weiterer bevorzugter Ausgestaltung der Erfindung beidseits der Abstützung durch die Bewegungseinheit an jeweils wenigstens einer weiteren Lagerstelle senkrecht zu der Längsrichtung des Strahlführungselementes an der Tragstruktur der Laserbearbeitungsmaschine abgestützt. Aufgrund der zusätzlichen Lagerstellen der Längsführungseinrichtung an der Tragstruktur der Laserbearbeitungsmaschine ergibt sich eine kompakte Baueinheit. Es besteht die Möglichkeit, die Längsführungseinrichtung des Strahlführungselementes an sämtlichen zusätzlichen Lagerstellen in Längsrichtung der Längsführungseinrichtung lose zu lagern. Alternativ kann an einer Seite der Abstützung durch die Bewegungseinheit eine zusätzliche Lagerstelle in Form eines Festlagers vorgesehen werden. In beiden Fällen ist eine ungehinderte Längenausdehnung der Längsführungseinrichtung etwa aufgrund von Temperaturschwankungen möglich, thermische Verformungen der Längsführungseinrichtung sind ausgeschlossen.

Im Falle der Erfindungsbauart nach Patentanspruch 4 erfolgt die Abstützung der Längsführungseinrichtung des Strahlführungselementes senkrecht zu dessen Längsrichtung über ein mit der Bewegungseinheit mitbewegtes Lagerelement. Dieses Lagerelement muss die Längsführungseinrichtung des Strahlführungselementes jedenfalls in Richtung des angestrebten Kraftflusses abstützen. Denkbar ist aber auch ein Lagerelement, welches die Längsführungseinrichtung des Strahlführungselementes in einer Ebene senkrecht zu der Längsrichtung der Längsführungseinrichtung vollständig umschließt.

Der Einfachheit halber ist das Lagerelement der Bewegungseinheit in weiterer vorteilhafter Ausgestaltung der Erfindung an der Längsführungseinrichtung des Strahlführungselementes gleitgelagert (Patentanspruch 5). Eine konstruktiv aufwändige Lagerung, die möglicherweise außerdem einen großen Einbauraum benötigen würde, ist verzichtbar.

Insbesondere zur Gewährleistung einer langen Lebensdauer der Längsführungseinrichtung des Strahlführungselementes und im Interesse einer Minimierung des erforderlichen Wartungs- und Instandsetzungsaufwandes ist an der erfindungsgemäßen Laserbearbeitungsmaschine gemäß Patentanspruch 6 vorgesehen, dass wenigstens eine der einander zugeordneten Gleitlagerflächen der Längsführungseinrichtung des Strahlführungselementes und des daran gleitgelagerten Lagerelementes der Bewegungseinheit verschleißfest und/oder reibungsarm ausgebildet sind. Dabei können eine hohe Verschleißfestigkeit und/oder eine geringe Reibung auf verschiedene Art und Weise erzielt werden. Denkbar sind beispielsweise entsprechende Materialpaarungen (zum Beispiel Gleitlagerflächen aus vorzugsweise eloxiertem Aluminium oder aus Edelstahl einerseits und aus Kunststoff andererseits) oder eine zweckentsprechende Oberflächenbehandlung der Gleitlagerflächen (zum Beispiel besonders verschleißresistente und/oder besonders glatte Oberflächenbeschichtungen).

Im Falle der Erfindungsbauart nach Patentanspruch 7 ist die Längsführungseinrichtung des Strahlführungselementes in Leichtbauweise ausgeführt. Eine möglichst geringe Masse der Längsführungseinrichtung ist insbesondere dann wünschenswert, wenn die Längsführungseinrichtung bearbeitungsbedingt in ihrer Querrichtung bewegt und dementsprechend beschleunigt werden muss.

Zur Realisierung der Längsführungseinrichtung als Strahlführungselement in Leichtbauweise ist in weiterer Ausgestaltung der Erfindung als Werkstoff für wenigstens einen Teil der Längsführungseinrichtung ein Faserverbundwerkstoff, vorzugsweise faserverstärkter Kunststoff, vorgesehen (Patentanspruch 8).

Gemäß Patentanspruch 9 umfasst die Längsführungseinrichtung des Strahlführungselementes im Falle einer weiteren Erfindungsbauart wenigstens ein stabartiges Längsführungselement, welches sich mit seiner Längsrichtung in Längsrichtung des Strahlführungselementes erstreckt.

Gemäß Patentanspruch 10 weist die Längsführungseinrichtung des Strahlführungselementes, gegebenenfalls wenigstens ein stabartiges Längsführungselement, eine als Hohlprofil ausgebildete Hülle sowie eine im Innern der Hülle vorgesehene Versteifung aus einem Faserverbundwerkstoff, insbesondere aus faserverstärktem Kunststoff auf. Eine derartige Längsführungseinrichtung besitzt ein geringes Eigengewicht, weist aber gleichwohl eine hohe Eigensteifigkeit auf.

Längsführungseinrichtungen für ein Strahlführungselement, wie sie an erfindungsgemäßen Laserbearbeitungsmaschinen zum Einsatz kommen können, sind beispielsweise in DE 10 2005 005 729 A1 beschrieben.

Nachstehend wird die Erfindung anhand beispielhafter schematischer Darstellungen näher erläutert. Es zeigen:
- Figur 1: eine Teildarstellung einer Laserbearbeitungsmaschine erster Bauart,
- Figur 2: eine Teildarstellung einer Laserbearbeitungsmaschine zweiter Bauart und
- Figur 3: den Teil III der Anordnung gemäß Figur 2 in vergrößerter Darstellung.

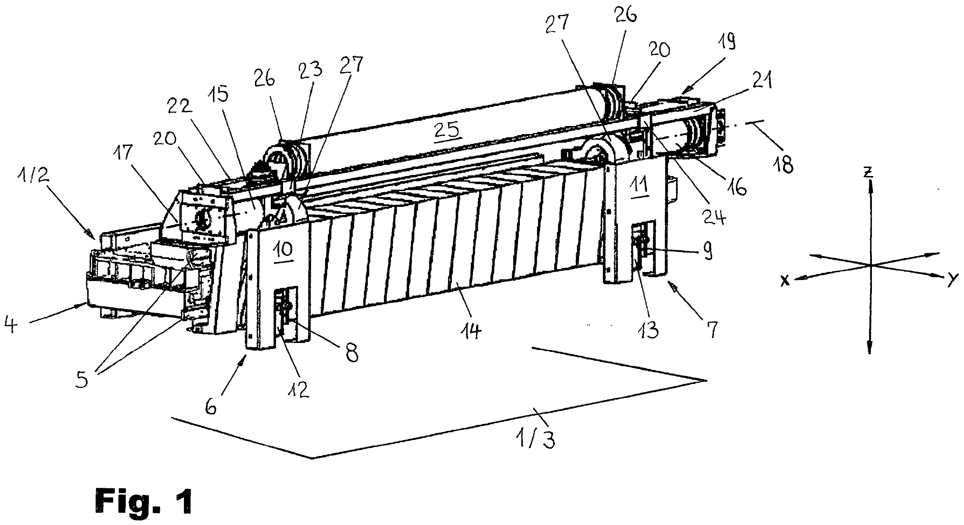

In Figur 1 ist eine Laserbearbeitungsmaschine 1 für die Blechbearbeitung im Umfang einer Brücke 2 und einer Werkstückauflage 3 dargestellt. Bei der Laserbearbeitungsmaschine 1 handelt es sich um eine Portalmaschine an sich üblicher Bauart, an welcher die Brücke 2 über die in Figur 1 angedeutete Werkstückauflage 3 in einer horizontalen y-Richtung verfährt. Zu diesem Zweck ist die Brücke 2 in gewohnter Weise mit beiden Enden auf jeweils einer in y-Richtung verlaufenden Führungseinrichtung gelagert.

Als Tragstruktur weist die Brücke 2 einen Brückenträger 4 auf. Der Brückenträger 4 erstreckt sich senkrecht zu der y-Richtung in einer x-Richtung. In der x-Richtung verlaufen Trag- und Führungsschienen 5 des Brückenträgers 4, die ihrerseits zwei Bearbeitungseinheiten 6, 7 an Bewegungseinheiten in Form von x-Schlitten 8, 9 der Bearbeitungseinheiten 6, 7 lagern.

Die x-Schlitten 8, 9 sind in Figur 1 durch Abdeckhauben 10, 11 der Bearbeitungseinheiten 6, 7 weitgehend verdeckt. Sie sind an den Trag- und Führungsschienen 5 in x-Richtung beweglich geführt und in dieser Richtung motorisch angetrieben bewegbar. Die x-Schlitten 8, 9 lagern ihrerseits jeweils einen Laserbearbeitungskopf 12, 13. Dabei ist der Laserbearbeitungskopf 12 an dem x-Schlitten 8 und der Laserbearbeitungskopf 13 an dem x-Schlitten 9 mittels eines entsprechenden Stellmotors in einer vertikalen z-Richtung zustellbar. Senkrecht zu der x-Richtung, d.h. in y-Richtung und in z-Richtung, sind die x-Schlitten 8, 9 spielfrei an den Trag- und Führungsschienen 5 und somit an dem Brückenträger 4 abgestützt.

Zwischen den Bearbeitungseinheiten 6, 7 ist an dem Brückenträger 4 eine herkömmliche Führungsbahnabdeckung 14 vorgesehen. Diese ist faltbar und mit einem Längsende an dem x-Schlitten 8 der Bearbeitungseinheit 6 und mit dem anderen Längsende an dem x-Schlitten 9 der Bearbeitungseinheit 7 befestigt. Verfahren die x-Schlitten 8, 9 in x-Richtung, so wird die Führungsbahnabdeckung 14 in Abhängigkeit von der Bewegungsrichtung der x-Schlitten 8, 9 in gewohnter Weise zusammengefaltet oder ausgezogen. In Figur 1 ist die Führungsbahnabdeckung 14 in ihrem maximal ausgezogenen Zustand abgebildet.

Unabhängig von der Führungsbahnabdeckung 14 sind an den x-Schlitten 8 der Bearbeitungseinheit 6 ein Strahlführungselement in Form eines Strahlführungsbalges 15 und an den x-Schlitten 9 der Bearbeitungseinheit 7 ein als Strahlführungsbalg 16 ausgeführtes Strahlführungselement angebunden. Bei beiden Laserschutzbälgen 15, 16 handelt es sich um Faltenbälge üblicher Bauart, deren Falten in Figur 1 im Interesse einer Darsteliungsvereinfachung nur zum Teil dargestellt sind.

Aufgrund der gegenseitigen Trennung können die Führungsbahnabdeckung 14 einerseits und die Strahlführungsbälge 15, 16 andererseits voneinander unabhängig gestaltet werden. Beispielsweise die Faltentiefe und der Auszugsfaktor können an der Führungsbahnabdeckung 14 und an den Strahlführungsbälgen 15, 16 unterschiedlich gewählt werden.

In gewohnter Weise dienen die Strahlführungsbälge 15, 16 jeweils zur Aufnahme eines Laserstrahls. Die Laserstrahlen sind in Figur 1 mit einer Strahlachse 17 bzw. mit einer Strahlachse 18 angedeutet. Sie werden von einer nicht gezeigten Laserstrahlquelle erzeugt und über herkömmliche Strahlführungsspiegel zu den Laserbearbeitungsköpfen 12, 13 der Bearbeitungseinheiten 6, 7 gelenkt. In den Laserschutzbälgen 15, 16 verlaufen die Laserstrahlen in x-Richtung, ehe sie mittels jeweils eines Umlenkspiegels an dem x-Schlitten 8 bzw. an dem x-Schlitten 9 in z-Richtung zu dem Laserbearbeitungskopf 12 bzw. dem Laserbearbeitungskopf 13 hin abgelenkt werden.

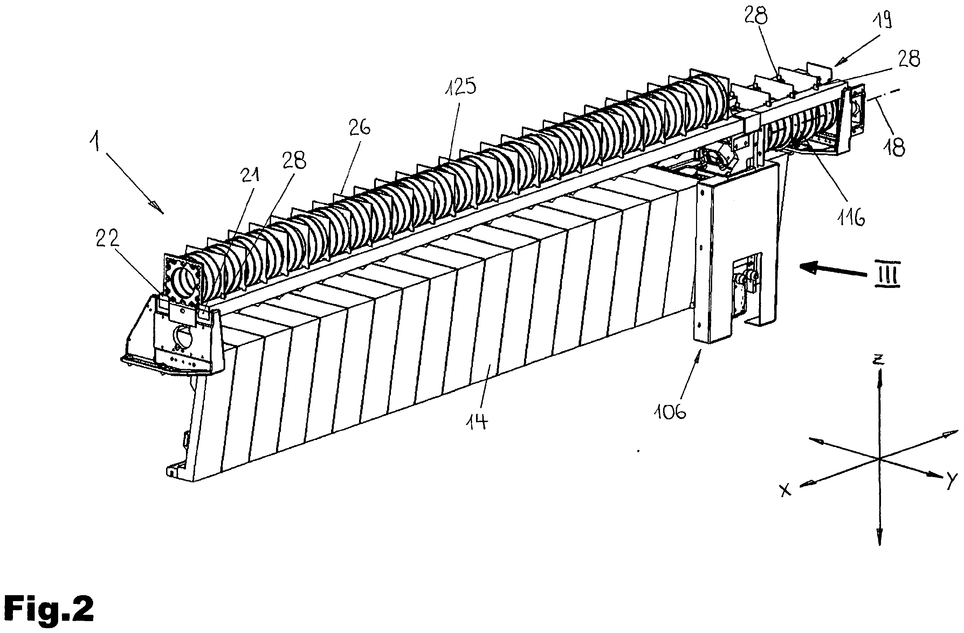

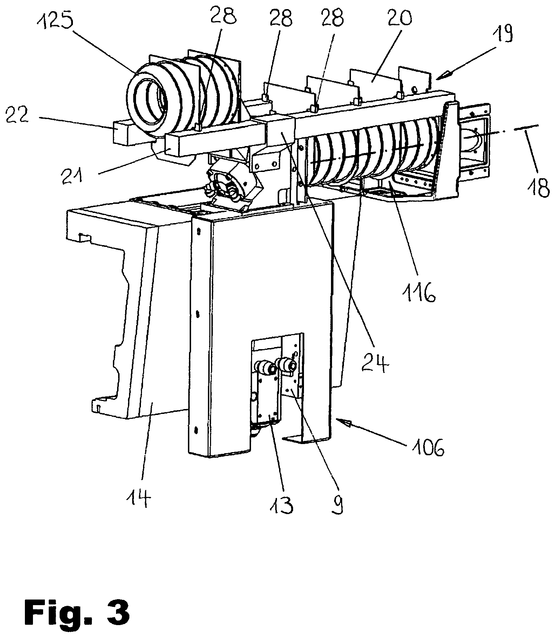

Die Bearbeitungseinheiten 6, 7 und dabei insbesondere deren x-Schlitten 8, 9 werden bearbeitungsbedingt in x-Richtung bewegt. In Abhängigkeit von der Bewegungsrichtung der x-Schlitten 8, 9 werden die an diese angebundenen Strahlführungsbälge 15, 16 in ihrer Länge verändert, d.h. ausgezogen oder gestaucht. Figur 1 zeigt die Bearbeitungseinheiten 6, 7 in ihren äußeren Endstellungen und folglich die Strahlführungsbälge 15, 16 in ihrem maximal gefalteten Zustand. Zum Ausziehen und zum Stauchen der Strahlführungsbälge 15,16 bewegen sich diese gekoppelt mit den x-Schlitten 8, 9 in x-Richtung. Bei dieser Bewegung werden die Strahlführungsbälge 15,16 in ihrer gleichgerichtet verlaufenden Längsrichtung an einer Längsführungseinrichtung 19 geführt. Zu diesem Zweck sind die Strahlführungsbälge 15,16 über Aufhängungselemente 20 an Führungsstäben 21, 22 der Längsführungseinrichtung 19 aufgehängt. Senkrecht zu ihrer Bewegungsrichtung, d.h. sowohl in horizontaler Richtung als auch in vertikaler Richtung, sind die Strahlführungsbälge 15, 16 über die Aufhängungselemente 20 an den Führungsstäben 21, 22 der Längsführungseinrichtung 19 abgestützt. Im Einzelnen wird die Lagerung der Strahlführungsbälge 15, 16 nachstehend zu den Figuren 2 und 3 beschrieben.

Bei den Führungsstäben 21, 22 handelt es sich um Vierkant-Hohlprofile aus Aluminium, die in ihrem Innern durch einen Faserverbundwerkstoff versteift sind. Im Einzelnen ist die Bauweise der Führungsstäbe 21, 22 in DE 10 2005 005 729 A1 beschrieben. Aluminium wurde insbesondere aufgrund seiner Eignung für den Leichtbau als Werkstoff für die Vierkant-Hohlprofile gewählt.

Die Führungsstäbe 21, 22 sind aufgrund ihrer Bauweise massearm. An ihren Längsenden sind die Führungsstäbe 21, 22 sowohl in y-Richtung als auch in z-Richtung an dem Brückenträger 4 abgestützt. An beiden Längsenden sind die Führungsstäbe 21, 22 dabei in ihrer Längsrichtung (x-Richtung) lose gelagert. Infolgedessen können sich die Führungsstäbe 21, 22 unter Temperatureinwirkung ungehindert längen und verkürzen, ohne dass daraus resultierende Verformungen der Führungsstäbe 21, 22 zu befürchten wären.

Zwischen ihren endseitigen Lagerstellen sind die Führungsstäbe 21, 22 an den x-Schlitten 8, 9 sowohl in y-Richtung als auch in z-Richtung abgestützt. Zu diesem Zweck weisen die x-Schlitten 8, 9 jeweils zwei Lagerelemente 23, 24 auf. Die Lagerelemente 23, 24 sind hülsenartig ausgebildet und sitzen längsbeweglich auf den Führungsstäben 21, 22 auf. In den Abbildungen erkennbar sind lediglich die Lagerelemente 23, 24 an dem Führungsstab 21. Die entsprechenden Lagerelemente 23, 24 an dem Führungsstab 22 sind in den Abbildungen verdeckt.

Sämtliche Lagerelemente 23,24 weisen Gleitstücke aus Kunststoff auf und sind über diese an den Führungsstäben 21, 22, im Einzelnen an dem aus Aluminium bestehenden Hohlprofil der Führungsstäbe 21, 22, gleitgelagert. In Folge der Materialpaarung Aluminium (vorzugsweise eloxiert)/Kunststoff laufen die Lagerelemente 23, 24 auf den Führungsstäben 21, 22 reibungs- und folglich verschleißarm. Auch die Lagerelemente 23, 24 behindern eine beispielsweise temperaturbedingte Längenänderung der Führungsstäbe 21, 22 nicht. Die Montage der Lagerelemente 23, 24 an den x-Schlitten 8, 9 erfolgt schwingungsgedämpft, z.B. mittels Silent-Blöcken.

Über die Lagerelemente 23, 24 werden Belastungen, die auf die Führungsstäbe 21, 22 aufgrund der Masse der Strahlführungsbälge 15, 16 in z-Richtung und aufgrund von bearbeitungsbedingten Beschleunigungen der Strahlführungsbälge 15, 16 in y-Richtung wirken, an den Trag- und Führungsschienen 5 in den Brückenträger 4 abgetragen. Die Lage der über die x-Schlitten 8, 9 bzw. deren Lagerelemente 23, 24 bewirkten Abstützung der Führungsstäbe 21, 22 variiert in Abhängigkeit von der bearbeitungsbedingten Position der x-Schlitten 8, 9 der Bearbeitungseinheiten 6, 7 an dem Brückenträger 4.

Über die Lagerelemente 23, 24 werden außerdem Belastungen der Führungsstäbe 21, 22 abgetragen, die durch ein als Volumenausgleichsbalg 25 ausgeführtes Volumenausgleichselement verursacht werden. Ebenso wie die Strahlführungsbälge 15, 16 ist auch der Volumenausgleichsbalg 25 als Faltenbalg ausgebildet. Auch die Falten des Volumenausgleichsbalges 25 sind in Figur 1 nur andeutungsweise dargestellt. An den Führungsstäben 21, 22 ist der Volumenausgleichsbalg 25 in x-Richtung ausziehbar und stauchbar geführt. Dabei ist der Volumenausgleichsbalg 25 über Stützeinrichtungen 26 an den Führungsstäben 21, 22 sowohl in Schwerkraftrichtung als auch in y-Richtung abgestützt. Auch die Stützeinrichtungen 26 werden nachfolgend zu den Figuren 2 und 3 im Detail beschrieben.

Über Strömungsverbindungen ist der Innenraum des Volumenausgleichsbalges 25 mit den Innenräumen der Strahlführungsbälge 15, 16 verbunden. Dadurch ergibt sich im Innern des Volumenausgleichbalges 25 und der Strahlführungsbälge 15, 16 ein Gesamtvolumen, das ungeachtet bearbeitungsbedingter Bewegungen der Bearbeitungseinheiten 6, 7 in x-Richtung konstant bleibt. Bewegen sich etwa die Bearbeitungseinheiten 6, 7 aus ihren äußeren Endpositionen gemäß Figur 1 nach innen und vergrößert sich dementsprechend das Volumen der Innenräume der Strahlführungsbälge 15, 16, so werden die beiden Längsenden des Volumenausgleichbalges 25 unter Verkleinerung des Innenraumvolumens des Volumenausgleichbalges 25 aufeinanderzu bewegt. In gewohnter Weise gestattet es der mittels des Volumenausgleichbalges 25 realisierte Volumenausgleich, die Strahlführungsbälge 15, 16 mit einem gasförmiges Medium zu füllen, das aufgrund seiner Zusammensetzung eine optimale Atmosphäre für die von den Strahlführungsbälgen 15, 16 aufzunehmenden Laserstrahlen bereitstellt.

In dem Zwischenraum zwischen der Führungsbahnabdeckung 14 und dem huckepack auf den Führungsstäben 21, 22 aufsitzenden Volumenausgleichsbalg 25 sind Energieketten 27 untergebracht, welche die Steuer- und Versorgungsleitungen für die Laserbearbeitungsköpfe 12, 13 führen.

Die Maschinenbauart gemäß den Figuren 2 und 3 stimmt mit der Maschinenbauart gemäß Figur 1 weitestgehend überein. Abweichend von den in Figur 1 dargestellten Verhältnissen ist ausweislich der Figuren 2 und 3 lediglich eine Bearbeitungseinheit 106 vorgesehen. Dementsprechend verfügt die Anordnung gemäß den Figuren 2 und 3 auch nur über einen einzelnen Strahlführungsbalg 116. Dieser entspricht in seiner Bauweise den Strahlführungsbälgen 15, 16 gemäß Figur 1.

In den Figuren 2 und 3 deutlich zu erkennen sind die Aufhängungselemente 20 des Strahlführungsbalges 116, die mit den Aufhängungselementen 20 der Strahlführungsbälge 15,16 gemäß Figur 1 übereinstimmen. Ebenfalls identisch sind die Stützeinrichtungen 26 eines in den Figuren 2 und 3 gezeigten und als Volumenausgleichsbalg 125 ausgebildeten Volumenausgleichselementes einerseits sowie die Stützeinrichtungen 26 des Volumenausgleichsbalges 25 gemäß Figur 1 andererseits. Sowohl die Aufhängungselemente 20 als auch die Stützeinrichtungen 26 sind über Kunststoffgleiter 28 an den Führungsstäben 21, 22 gelagert.

## Patentansprüche

1. Laserbearbeitungsmaschine
• mit einem Strahlführungselement (15, 16; 116) für einen Laserstrahl, welches mit seiner Längsrichtung in Richtung der Strahlachse (17, 18) des von ihm aufzunehmenden Laserstrahls verläuft und welches wenigstens mit einem Teil in seiner Längsrichtung beweglich und dadurch längenveränderlich ist sowie
• mit einer Bewegungseinheit (8, 9), an welche das Strahlführungselement (15, 16; 116) angebunden ist und die unter Änderung der Länge des Strahlführungselementes (15, 16; 116) gemeinsam mit dem Strahlführungselement (15, 16; 116) in dessen Längsrichtung bewegbar ist,
• wobei das Strahlführungselement (15, 16; 116) an einer in seiner Längsrichtung verlaufenden Längsführungseinrichtung (19) senkrecht zu seiner Längsrichtung abgestützt und bei einer Bewegung in seiner Längsrichtung geführt ist und
• wobei die Bewegungseinheit (8, 9) an einer von der Längsführungseinrichtung (19) des Strahlführungselementes (15, 16; 116) verschiedenen Tragstruktur (4) der Laserbearbeitungsmaschine (1) senkrecht zu der Längsrichtung des Strahlführungselementes (15, 16; 116) abgestützt ist,
**dadurch gekennzeichnet, dass**
die Längsführungseinrichtung (19) des Strahlführungselementes (15, 16; 116) über die Bewegungseinheit (8, 9) senkrecht zu der Längsrichtung des Strahlführungselementes (15, 16; 116) an der Tragstruktur (4) der Laserbearbeitungsmaschine (1) abgestützt ist.

2. Laserbearbeitungsmaschine nach Anspruch 1, **dadurch gekennzeichnet,**
• **dass** für das Strahlführungselement (15, 16; 116) ein Volumenausgleichselement (25, 125) vorgesehen ist mit einem Innenraum, der mit einem Innenraum des Strahlführungselementes (15, 16; 116) in Strömungsverbindung steht und der ein Volumen aufweist, das sich mit dem Volumen des Innenraumes des Strahlführungselementes (15, 16; 116) zu einem abgeschlossenen Gesamtvolumen ergänzt, wobei eine infolge einer Längenänderung des Strahlführungselementes (15, 16; 116) auftretende Änderung des Volumens des Innenraumes des Strahlführungselementes (15, 16; 116) durch eine Änderung des Volumens des Innenraumes des Volumenausgleichselementes (25, 125) unter Erhaltung des Gesamtvolumens ausgleichbar ist,
• **dass** das Volumenausgleichselement (25, 125) an der Längsführungseinrichtung (19) des Strahlführungselementes (15, 16; 116) senkrecht zu der Längsrichtung des Strahlführungselementes (15, 16; 116) abgestützt ist und
• **dass** die Längsführungseinrichtung (19) des Strahlführungselementes (15, 16; 116) gemeinsam mit dem Strahlführungselement (15, 16; 116) und dem Volumenausgleichselement (25, 125) in einer senkrecht zu der Längsrichtung des Strahlführungselementes (15, 16; 116) verlaufenden Bewegungsrichtung bewegbar ist, wobei das Strahlführungselement (15, 16; 116) und das Volumenausgleichselement (25, 125) an Seiten der Längsführungseinrichtung (19) des Strahlführungselementes (15, 16; 116) angeordnet sind, die senkrecht zu der Längsrichtung des Strahlführungselementes (15, 16; 116) und außerdem senkrecht zu der genannten Bewegungsrichtung einander gegenüberliegen.

3. Laserbearbeitungsmaschine nach einem der vorhergehenden Ansprüche, **dadurch gekennzeichnet, dass** die Längsführungseinrichtung (19) des Strahlführungselementes (15, 16; 116), in Längsrichtung des Strahlführungselementes (15, 16; 116) gesehen, beidseits der Abstützung durch die Bewegungseinheit (8, 9) an jeweils wenigstens einer weiteren Lagerstelle senkrecht zu der Längsrichtung des Strahlführungselementes (15, 16; 116) an der Tragstruktur (4) der Laserbearbeitungsmaschine (1) abgestützt ist.

4. Laserbearbeitungsmaschine nach einem der vorhergehenden Ansprüche, **dadurch gekennzeichnet, dass** die Längsführungseinrichtung (19) des Strahlführungselementes (15, 16; 116) über die Bewegungseinheit (8, 9) senkrecht zu der Längsrichtung des Strahlführungselementes (15, 16; 116) an der Tragstruktur (4) der Laserbearbeitungsmaschine (1) abgestützt ist, indem die Bewegungseinheit (8, 9) ein Lagerelement (23, 24) aufweist, welches sich bei der Bewegung der Bewegungseinheit (8, 9) relativ zu der Längsführungseinrichtung (19) des Strahlführungselementes (15, 16; 116) in Längsrichtung des Strahlführungselementes (15, 16; 116) bewegt und dabei die Längsführungseinrichtung (19) des Strahlführungselementes (15, 16; 116) senkrecht zu der Längsrichtung des Strahlführungselementes (15, 16; 116) abstützt.

5. Laserbearbeitungsmaschine nach Anspruch 4, **dadurch gekennzeichnet, dass** das Lagerelement (23, 24) der Bewegungseinheit (8, 9) an der Längsführungseinrichtung (19) des Strahlführungselementes (15, 16; 116) gleitgelagert ist.

6. Laserbearbeitungsmaschine nach Anspruch 5, **dadurch gekennzeichnet, dass** das Lagerelement (23, 24) der Bewegungseinheit (8, 9) an der Längsführungseinrichtung (19) des Strahlführungselementes (15, 16; 116) gleitgelagert ist, indem die Längsführungseinrichtung (19) und das Lagerelement (23, 24) der Bewegungseinheit (8, 9) einander zugeordnete Gleitlagerflächen aufweisen und dass wenigstens eine der einander zugeordneten Gleitlagerflächen der Längsführungseinrichtung (19) des Strahlführungselementes (15, 16; 116) und des daran gleitgelagerten Lagerelementes (23, 24) der Bewegungseinheit (8, 9) verschleißfest und/oder reibungsvermindernd ausgebildet ist.

7. Laserbearbeitungsmaschine nach einem der vorhergehenden Ansprüche, **dadurch gekennzeichnet, dass** die Längsführungseinrichtung (19) des Strahlführungselementes (15, 16; 116) in Leichtbauweise ausgeführt ist.

8. Laserbearbeitungsmaschine nach einem der vorhergehenden Ansprüche, **dadurch gekennzeichnet, dass** als Werkstoff für wenigstens einen Teil der Längsführungseinrichtung (19) des Strahlführungselementes (15, 16; 116) ein Faserverbundwerkstoff, vorzugsweise faserverstärkter Kunststoff, vorgesehen ist.

9. Laserbearbeitungsmaschine nach einem der vorhergehenden Ansprüche, **dadurch gekennzeichnet, dass** die Längsführungseinrichtung (19) des Strahlführungselementes (15, 16; 116) wenigstens einen Führungsstab (21, 22) umfasst, der sich mit seiner Längsrichtung in Längsrichtung des Strahlführungselementes (15, 16; 116) erstreckt.

10. Laserbearbeitungsmaschine nach einem der vorhergehenden Ansprüche, **dadurch gekennzeichnet, dass** die Längsführungseinrichtung (19) des Strahlführungselementes (15, 16; 116), gegebenenfalls wenigstens ein Führungsstab (21, 22), eine als Hohlprofil ausgebildete Hülle sowie eine im Innern der Hülle vorgesehene Versteifung aus einem Faserverbundwerkstoff, insbesondere aus faserverstärktem Kunststoff, aufweist.

## Claims

1. Laser processing machine
• having for a laser beam a beam guiding element (15, 16; 116) which extends with the longitudinal direction thereof in the direction of the beam axis (17, 18) of the laser beam which is intended to be received thereby, and which is at least with a portion movable in the longitudinal direction thereof and which can thereby be changed in terms of length, and
• having a movement unit (8, 9) to which the beam guiding element (15, 16; 116) is connected and which, with the length of the beam guiding element (15, 16; 116) being changed, can be moved together with the beam guiding element (15, 16; 116) in the longitudinal direction thereof,
• wherein the beam guiding element (15, 16; 116) is supported perpendicularly to the longitudinal direction thereof on a longitudinal guiding device (19) which extends in the longitudinal direction thereof and is guided during a movement in the longitudinal direction thereof, and
• wherein the movement unit (8, 9) is supported perpendicularly to the longitudinal direction of the beam guiding element (15, 16; 116) on a carrier structure (4) of the laser processing machine (1), which carrier structure is different from the longitudinal guiding device (19) of the beam guiding element (15, 16; 116),
**characterised in that**
the longitudinal guiding device (19) of the beam guiding element (15, 16; 116) is supported via the movement unit (8, 9) perpendicularly to the longitudinal direction of the beam guiding element (15, 16; 116) on the carrier structure (4) of the laser processing machine (1).

2. Laser processing machine according to claim 1, **characterised in that**
• for the beam guiding element (15, 16; 116) there is provided a volume compensation element (25, 125) having an inner space which is connected in flow terms to an inner space of the beam guiding element (15, 16; 116) and which has a volume which is supplemented by the volume of the inner space of the beam guiding element (15, 16; 116) to form a closed overall volume, wherein a change of the volume of the inner space of the beam guiding element (15, 16; 116), which change occurs as a result of a length change of the beam guiding element (15, 16; 116), can be compensated for by means of a change of the volume of the inner space of the volume compensation element (25, 125) with the overall volume being maintained,
• **in that** the volume compensation element (25, 125) is supported perpendicularly to the longitudinal direction of the beam guiding element (15, 16; 116) on the longitudinal guiding device (19) of the beam guiding element (15, 16; 116), and
• **in that** the longitudinal guiding device (19) of the beam guiding element (15, 16; 116) together with the beam guiding element (15, 16; 116) and the volume compensation element (25, 125) can be moved in a movement direction which extends perpendicularly to the longitudinal direction of the beam guiding element (15, 16; 116), wherein the beam guiding element (15, 16; 116) and the volume compensation element (25, 125) are arranged at sides of the longitudinal guiding device (19) of the beam guiding element (15, 16; 116) which are opposite each other perpendicularly to the longitudinal direction of the beam guiding element (15, 16; 116) and furthermore perpendicularly to the mentioned movement direction.

3. Laser processing machine according to either of the preceding claims, **characterised in that** the longitudinal guiding device (19) of the beam guiding element (15, 16; 116), when viewed in the longitudinal direction of the beam guiding element (15, 16; 116), is supported at both sides of the support by the movement unit (8, 9) at least at one additional bearing location perpendicularly relative to the longitudinal direction of the beam guiding element (15, 16; 116) on the carrier structure (4) of the laser processing machine (1).

4. Laser processing machine according to any one of the preceding claims, **characterised in that** the longitudinal guiding device (19) of the beam guiding element (15, 16; 116) is supported via the movement unit (8, 9) perpendicularly to the longitudinal direction of the beam guiding element (15, 16; 116) on the carrier structure (4) of the laser processing machine (1), with the movement unit (8, 9) having a bearing element (23, 24) which, when the movement unit (8, 9) moves relative to the longitudinal guiding device (19) of the beam guiding element (15, 16; 116), moves in the longitudinal direction of the beam guiding element (15, 16; 116) and in this instance supports the longitudinal guiding device (19) of the beam guiding element (15, 16; 116) perpendicularly to the longitudinal direction of the beam guiding element (15, 16; 116).

5. Laser processing machine according to claim 4, **characterised in that** the bearing element (23, 24) of the movement unit (8, 9) is supported in a sliding manner on the longitudinal guiding device (19) of the beam guiding element (15, 16; 116).

6. Laser processing machine according to claim 5, **characterised in that** the bearing element (23, 24) of the movement unit (8, 9) is supported in a sliding manner on the longitudinal guiding device (19) of the beam guiding element (15, 16; 116) by the longitudinal guiding device (19) and the bearing element (23, 24) of the movement unit (8, 9) having plain bearing faces which are associated with each other, and **in that** at least one of the mutually associated plain bearing faces of the longitudinal guiding device (19) of the beam guiding element (15, 16; 116) and the bearing element (23, 24) of the movement unit (8, 9), which element is supported in a sliding manner thereon, is constructed in a wear-resistant and/or friction-reducing manner.

7. Laser processing machine according to any one of the preceding claims, **characterised in that** the longitudinal guiding device (19) of the beam guiding element (15, 16; 116) is constructed as a lightweight construction.

8. Laser processing machine according to any one of the preceding claims, **characterised in that** a composite fibre material, preferably fibre-reinforced plastics material, is provided as a material for at least a portion of the longitudinal guiding device (19) of the beam guiding element (15, 16; 116).

9. Laser processing machine according to any one of the preceding claims, **characterised in that** the longitudinal guiding device (19) of the beam guiding element (15, 16; 116) comprises at least one guiding rod (21, 22) which extends with the longitudinal direction thereof in the longitudinal direction of the beam guiding element (15, 16; 116).

10. Laser processing machine according to any one of the preceding claims, **characterised in that** the longitudinal guiding device (19) of the beam guiding element (15, 16; 116) where applicable at least one guiding rod (21, 22), has a sheath which is constructed as a hollow profile and a reinforcement of composite fibre material, in particular of fibre-reinforced plastics material, which is provided inside the sheath.

## Revendications

1. Machine d'usinage au laser
• avec un élément de guidage de faisceau (15, 16; 116) pour un faisceau laser, lequel s'étend par sa direction longitudinale dans la direction de l'axe de faisceau (17, 18) du faisceau laser qu'il doit recevoir et lequel est déplaçable au moins par une partie dans sa direction longitudinale et de ce fait modifiable en longueur, et
• avec une unité de déplacement (8, 9) à laquelle l'élément de guidage de faisceau (15, 16 ; 116) est relié et qui, en modifiant la longueur de l'élément de guidage de faisceau (15, 16 ; 116), est déplaçable en commun avec l'élément de guidage de faisceau (15, 16 ; 116) dans la direction longitudinale de celui-ci,
• l'élément de guidage de faisceau (15, 16 ; 116) étant soutenu perpendiculairement à sa direction longitudinale et étant guidé lors d'un déplacement dans sa direction longitudinale par un dispositif de guidage longitudinal (19) s'étendant dans la direction longitudinale de l'élément de guidage de faisceau (15, 16; 116) et
• l'unité de déplacement (8, 9) étant soutenue perpendiculairement à la direction longitudinale de l'élément de guidage de faisceau (15, 16 ; 116) sur une structure porteuse (4) de la machine d'usinage au laser (1) différente du dispositif de guidage longitudinal (19) de l'élément de guidage de faisceau (15, 16; 116),
**caractérisée en ce que**
le dispositif de guidage longitudinal (19) de l'élément de guidage de faisceau (15, 16; 116) est soutenu par l'unité de déplacement (8, 9) perpendiculairement à la direction longitudinale de l'élément de guidage de faisceau (15, 16 ; 116) sur la structure porteuse (4) de la machine d'usinage au laser (1).

2. Machine d'usinage au laser selon la revendication 1, **caractérisée en ce**
• **que** pour l'élément de guidage de faisceau (15, 16 ; 116) est prévu un élément de compensation de volume (25, 125) avec un espace intérieur qui est en communication d'écoulement avec un espace intérieur de l'élément de guidage de faisceau (15, 16; 116) et qui présente un volume qui se complète avec le volume de l'espace intérieur de l'élément de guidage de faisceau (15, 16 ; 116) pour former un volume total fermé, une modification du volume de l'espace intérieur de l'élément de guidage de faisceau (15, 16 ; 116) résultant d'une modification de longueur de l'élément de guidage de faisceau (15, 16 ; 116) étant compensable par une modification du volume de l'espace intérieur de l'élément de compensation de volume (25, 125) en maintenant le volume total,
• **que** l'élément de compensation de volume (25, 125) est soutenu sur le dispositif de guidage longitudinal (19) de l'élément de guidage de faisceau (15, 16; 116) perpendiculairement à la direction longitudinale de l'élément de guidage de faisceau (15, 16 ; 116) et
• **que** le dispositif de guidage longitudinal (19) de l'élément de guidage de faisceau (15, 16 ; 116) est déplaçable en commun avec l'élément de guidage de faisceau (15, 16; 116) et l'élément de compensation de volume (25, 125) dans une direction de déplacement perpendiculaire à la direction longitudinale de l'élément de guidage de faisceau (15, 16 ; 116), l'élément de guidage de faisceau (15, 16 ; 116) et l'élément de compensation de volume (25, 125) étant disposés sur des côtés du dispositif de guidage longitudinal (19) de l'élément de guidage de faisceau (15, 16 ; 116) qui se font face perpendiculairement à la direction longitudinale de l'élément de guidage de faisceau (15, 16 ; 116) et en outre perpendiculairement à ladite direction de déplacement.

3. Machine d'usinage au laser selon l'une des revendications précédentes, **caractérisée en ce que** le dispositif de guidage longitudinal (19) de l'élément de guidage de faisceau (15, 16 ; 116), vu dans la direction longitudinale de l'élément de guidage de faisceau (15, 16 ; 116), est soutenu des deux côtés du soutien par l'unité de déplacement (8, 9) chaque fois à au moins un autre point d'appui perpendiculairement à la direction longitudinale de l'élément de guidage de faisceau (15, 16; 116) sur la structure porteuse (4) de la machine d'usinage au laser (1).

4. Machine d'usinage au laser selon l'une des revendications précédentes, **caractérisée en ce que** le dispositif de guidage longitudinal (19) de l'élément de guidage de faisceau (15, 16 ; 116) est soutenu par l'unité de déplacement (8, 9) perpendiculairement à la direction longitudinale de l'élément de guidage de faisceau (15, 16 ; 116) sur la structure porteuse (4) de la machine d'usinage au laser (1), par le fait que l'unité de déplacement (8, 9) présente un élément d'appui (23, 24) qui, lors du déplacement de l'unité de déplacement (8, 9) par rapport au dispositif de guidage longitudinal (19) de l'élément de guidage de faisceau (15, 16 ; 116), se déplace dans la direction longitudinale de l'élément de guidage de faisceau (15, 16 ; 116) et soutient ce faisant le dispositif de guidage longitudinal (19) de l'élément de guidage de faisceau (15, 16 ; 116) perpendiculairement à la direction longitudinale de l'élément de guidage de faisceau (15, 16 ; 116).

5. Machine d'usinage au laser selon la revendication 4, **caractérisée en ce que** l'élément d'appui (23, 24) de l'unité de déplacement (8, 9) est monté par palier lisse sur le dispositif de guidage longitudinal (19) de l'élément de guidage de faisceau (15, 16 ; 116).

6. Machine d'usinage au laser selon la revendication 5, **caractérisée en ce que** l'élément d'appui (23, 24) de l'unité de déplacement (8, 9) est monté par palier lisse sur le dispositif de guidage longitudinal (19) de l'élément de guidage de faisceau (15, 16; 116), le dispositif de guidage longitudinal (19) et l'élément d'appui (23, 24) de l'unité de déplacement (8, 9) présentant des surfaces de palier lisse associées l'une à l'autre et qu'au moins une des surfaces de palier lisse associées l'une à l'autre du dispositif de guidage longitudinal (19) de l'élément de guidage de faisceau (15, 16; 116) et de l'élément d'appui (23, 24) de l'unité de déplacement (8, 9) monté dessus par palier lisse est réalisée de manière à résister à l'usure et/ou à réduire le frottement.

7. Machine d'usinage au laser selon l'une des revendications précédentes, **caractérisée en ce que** le dispositif de guidage longitudinal (19) de l'élément de guidage de faisceau (15, 16 ; 116) est réalisé en construction légère.

8. Machine d'usinage au laser selon l'une des revendications précédentes, **caractérisée en ce qu'**un matériau composite à base de fibres, de préférence une matière plastique renforcée par des fibres, est prévu comme matériau pour au moins une partie du dispositif de guidage longitudinal (19) de l'élément de guidage de faisceau (15, 16 ; 116).

9. Machine d'usinage au laser selon l'une des revendications précédentes, **caractérisée en ce que** le dispositif de guidage longitudinal (19) de l'élément de guidage de faisceau (15, 16; 116) comprend au moins une barre de guidage (21, 22) qui s'étend par sa direction longitudinale dans la direction longitudinale de l'élément de guidage de faisceau (15, 16 ; 116).

10. Machine d'usinage au laser selon l'une des revendications précédentes, **caractérisée en ce que** le dispositif de guidage longitudinal (19) de l'élément de guidage de faisceau (15, 16 ; 116), le cas échéant au moins une barre de guidage (21, 22), présente une enveloppe réalisée sous la forme d'un profilé creux ainsi qu'un renfort en matériau composite à base de fibres, en particulier en matière plastique renforcée par des fibres, prévu à l'intérieur de l'enveloppe.
